Europäisches Patentamt

European Patent Office

Office européen des brevets

(19)

(11) Numéro de publication: **0 184 533**

**A1**

(12)

# DEMANDE DE BREVET EUROPEEN

(21) Numéro de dépôt: **85440066.0**

(22) Date de dépôt: **08.11.85**

(51) Int. Cl.⁴: **A 01 D 34/66**

(30) Priorité: **12.11.84 FR 8417351**

(43) Date de publication de la demande:
**11.06.86 Bulletin 86/24**

(84) Etats contractants désignés:
**DE GB IT NL SE**

(71) Demandeur: **KUHN S.A.**
**4, Impasse des Fabriques**
**F-67700 Saverne(FR)**

(72) Inventeur: **Ermacora, Rino**
**5, rue de Monswiller Ottersthal**
**F-67700 Saverne(FR)**

(72) Inventeur: **Jehl, Patrice**
**34, rue de l'Ecole Imbsheim**
**F-67330 Bouxwiller(FR)**

(54) **Faucheuse comportant un châssis muni d'une structure intermédiaire et de moyens destinés à empêcher l'accrochage de fourrage à ladite structure intermédiaire.**

(57) Faucheuse, comportant un châssis muni d'une structure intermédiaire destinée à supporter en partie au moins les organes de coupe.

FIG.9

EP 0 184 533 A1

La présente invention concerne les faucheuses comportant des organes de coupe supportés par un châssis.

Ces faucheuses peuvent en sus comporter des organes de travail supplémentaires tels que des organes de conditionnement du fourrage par exemple.

On connaît de telles faucheuses qui ont des largeurs de travail importantes. Une partie au moins de leurs organes de travail s'étendent en général sensiblement sur toute la largeur de travail de la machine. Comme ces organes de travail sont relativement grands et en général relativement volumineux, ils engendrent des problèmes au niveau fabrication, stockage et transport. Mais ils engendrent également des problèmes au niveau du travail réalisé car certains de ces organes de travail deviennent de moins en moins performants au fur et à mesure que leur largeur de travail augmente.

La présente invention a pour but de créer une faucheuse qui ne possède pas les inconvénients des faucheuses de l'art antérieur, tout en fournissant un travail d'une qualité satisfaisante.

Pour ce faire, la faucheuse selon l'invention est caractérisée par le fait que le châssis est muni d'une structure intermédiaire destinée à supporter en partie au moins les organes de coupe qui s'étendent de part et d'autre de ladite structure intermédiaire, et que dans le voisinage de la structure intermédiaire sont agencés des moyens destinés à empêcher l'accrochage de fourrage à ladite structure intermédiaire.

Au cas où la faucheuse comporte des organes de travail supplémentaires tels que des organes de conditionnement de fourrage par exemple, la faucheuse selon l'invention est caractérisée par le fait que le châssis est muni d'une structure intermédiaire destinée à supporter en partie au moins les organes de coupe et/ou les organes de travail supplémentaires, lesdits organes de coupe et lesdits organes de travail supplémentaires s'étendant de part et d'autre de la structure intermédiaire, et que dans le voisinage de la structure intermédiaire sont agencés des moyens destinés à empêcher l'accrochage de fourrage à ladite structure intermédiaire.

Grâce à l'invention, la faucheuse peut ainsi avoir une grande largeur de travail bien qu'une partie au moins de ses organes de travail (organes de coupe ou organes de travail supplémentaires) aient une longueur réduite. Ces organes de travail peuvent ainsi être fabriqués plus facilement. En sus, leur stockage et leur transport, de même que le stockage et le transport des faucheuses peuvent être plus aisés.

Par ailleurs, la diminution de la qualité du travail réalisé par certains organes de travail dont la largeur de travail est trop importante, est supprimée. En effet, bien que la largeur de travail globale de la faucheuse soit importante, la largeur de travail desdits organes de travail est relativement réduite.

Malgré la présence de la structure intermédiaire qui s'étend à l'intérieur de la largeur de travail définie par les organes de coupe s'étendant de part et d'autre de celle-ci, la faucheuse peut tout de même, grâce à l'invention, réaliser un travail satisfaisant.

En effet, pour atteindre ce but, l'invention a prévu des moyens destinés à empêcher l'accrochage de fourrage à la structure intermédiaire. Ainsi, les risques de bourrages qui pourraient être engendrés par l'accrochage de fourrage à la structure intermédiaire, sont substantiellement diminués, voire supprimés.

Selon une forme de réalisation de l'invention, les moyens destinés à empêcher l'accrochage de fourrage à la structure intermédiaire s'étendent sensiblement en partie au moins sous la structure intermédiaire et avantageusement dans le voisinage avant de celle-ci.

Selon une forme de réalisation supplémentaire, la zone d'action des moyens destinés à empêcher l'accrochage de fourrage à la structure intermédiaire, est située en partie au moins sensiblement à l'avant de la ligne de coupe des organes de coupe.

En sus, lesdits moyens destinés à empêcher l'accrochage de fourrage à la structure intermédiaire peuvent, dans l'invention, s'étendre sensiblement en partie au moins dans le plan vertical de symétrie de la structure intermédiaire.

Selon une autre forme de réalisation, lesdits moyens peuvent aussi s'étendre en partie au moins de part et d'autre du plan vertical de symétrie de la structure intermédiaire.

Suivant une autre caractéristique de l'invention, il est prévu que les moyens destinés à empêcher l'accrochage de fourrage à la structure intermédiaire sont fixés sur la faucheuse de manière à pouvoir pivoter au moins vers le haut. De cette sorte, lesdits moyens peuvent s'adapter à la configuration du terrain sur lequel opère la faucheuse. Ceci permet auxdits moyens de réaliser un travail satisfaisant et de ne pas être endommagés par d'éventuelles protubérances que peut présenter le terrain.

Selon une réalisation de l'invention, il est prévu que le pivotement des moyens destinés à empêcher l'accrochage de fourrage à la structure intermédiaire se fait autour d'un axe dirigé transversalement à la direction de travail de la faucheuse.

Par ailleurs, il est prévu que le pivotement desdits moyens peut être condamné ou est limité vers le bas. Ceci permet notamment de maintenir lesdits moyens éloignés du sol pendant le transport.

Selon une caractéristique supplémentaire, il est également prévu que le pivotement desdits moyens est limité vers le haut. Ceci évite une interférence de ces moyens avec des éléments de la faucheuse, interférence qui pourrait occasionner des dégâts notamment lorsque lesdits moyens sont animés.

Les moyens destinés à empêcher l'accrochage de fourrage à la structure intermédiaire peuvent en sus dans l'invention comporter des organes par l'intermédiaire desquels ils s'appuient au moins momentanément sur le sol.

Suivant une autre caractéristique de l'invention, les moyens destinés à empêcher l'accrochage de fourrage à la structure intermédiaire comportent des moyens animés d'entraînement du fourrage. Ces moyens animés d'entraînement du fourrage entraînent le fourrage coupé par les organes de coupe de manière qu'il puisse être bien déposé derrière les organes de coupe ou être bien repris par les organes de travail supplémentaires.

Selon une réalisation avantageuse de l'invention, les moyens animés d'entraînement du fourrage tournent autour d'au moins un axe dirigé vers le haut. Avantageusement également ces moyens sont agencés en partie au moins sensiblement au-dessus de l'un au moins des organes de coupe situés dans le voisinage de la structure intermédiaire. Si cet organe de coupe est rotatif, ceux-ci tournent de préférence avec cet organe de coupe.

Ces moyens d'entraînement du fourrage sont ainsi particulièrement efficaces pour dégager le fourrage qui se présente devant la structure intermédiaire.

Selon une réalisation préférée d'une faucheuse suivant l'invention, un organe de coupe s'étend de part et d'autre du plan vertical de symétrie de la structure intermédiaire, et sensiblement au-dessus de chacun de ces organes de coupe sont agencés en partie au moins des moyens d'entraînement du fourrage.

Avantageusement, lesdits moyens d'entraînement tournent au moins partiellement sensiblement autour du même axe que l'organe de coupe au-dessus duquel ils s'étendent en partie au moins. Avantageusement également, il est prévu dans l'invention que les moyens d'entraînement du fourrage tournent sensiblement à la même vitesse que l'organe de coupe au-dessus duquel ils s'étendent en partie au moins.

Selon une caractéristique supplémentaire de l'invention, les moyens d'entraînement du fourrage comportent au moins un tambour animé. Avantageusement, il est prévu que le tambour est muni de moyens qui augmentent son agressivité. Avantageusement également, le tambour peut avoir une forme de tronc de cône.

Suivant une autre caractéristique, les moyens destinés à empêcher l'accrochage de fourrage à la structure intermédiaire, comportent des moyens de séparation du fourrage. Il est d'ailleurs parfaitement possible que ces moyens de séparation du fourrage soient agencés sur une faucheuse conjointement avec des moyens d'entraînement du fourrage.

Avantageusement, ces moyens de séparation s'étendent de préférence jusque devant la ligne de coupe des organes de coupe.

De cette sorte, le fourrage qui se présente à l'endroit de la structure intermédiaire peut être séparé avant d'être coupé par les organes de coupe.

Suivant une caractéristique supplémentaire, les moyens de séparation du fourrage comportent un dispositif coupant.

Selon une réalisation, il est prévu que ce dispositif coupant est constitué par un couteau dont l'arête tranchante est dirigée vers l'avant.

Selon une autre caractéristique supplémentaire, le dispositif coupant est animé. Avantageusement, ce dispositif coupant comporte au moins une suite de dents animées.

Selon une autre caractéristique supplémentaire, les moyens de séparation du fourrage sont constitués par au moins une surface ayant une arête frontale.

Préférentiellement, l'arête tranchante du couteau, la ou les suites de dents du dispositif coupant animé, ou l'arête frontale de la ou des surfaces de séparation s'étendent vers l'arrière et vers le haut.

Ces moyens de séparation séparent notamment les brins de fourrage qui sont versés transversalement à la direction de travail de la faucheuse à l'endroit de la structure intermédiaire.

Dans le cas où les moyens de séparation comportent un dispositif coupant, les brins de fourrage versés sont coupés en deux. Les brins séparés ou coupés en deux, peuvent alors être facilement coupés par les organes de coupe qui s'étendent de part et d'autre de la structure intermédiaire, et être entraînés pour être déposés derrière les organes de coupe ou être repris par des organes de travail supplémentaires, sans qu'ils puissent s'accrocher à la structure intermédiaire.

Selon une autre caractéristique, les moyens destinés à empêcher l'accrochage de fourrage à la structure intermédiaire comportent des moyens de guidage du fourrage. Dans le cadre de l'invention, il est également parfaitement possible que ces moyens de guidage soient agencés sur une faucheuse conjointement avec des moyens d'entraînement et/ou de séparation du fourrage.

Selon une réalisation, les moyens de guidage sont constitués par deux surfaces non horizontales qui s'étendent l'une près de l'autre à l'avant et qui divergent vers l'arrière.

Lorsque les moyens de séparation du fourrage comportent au moins une surface de séparation, les surfaces de guidage se raccordent avantageusement sensiblement à cette ou ces surfaces de séparation.

Ces moyens de guidage du fourrage canalisent bien le fourrage de part et d'autre de la structure intermédiaire pour qu'il puisse être déposé derrière les organes de coupe ou être repris par les organes de travail supplémentaires.

Dans l'invention, il est prévu, lorsque les moyens de guidage peuvent pivoter autour d'un axe dirigé transversalement à la direction de travail de la faucheuse, que l'espace entre les moyens de guidage et la structure intermédiaire soit au moins partiellement obturé par des moyens d'obturation.

Selon une réalisation, ces moyens d'obturation sont constitués par deux surfaces non horizontales qui s'étendent l'une près de l'autre à l'avant et qui divergent vers l'arrière.

Lorsque les moyens de guidage sont constitués par deux surfaces non horizontales qui s'étendent l'une près de l'autre à l'avant et qui divergent vers l'arrière, les surfaces d'obturation s'étendent au moins partiellement entre ces surfaces de guidage.

Selon une autre caractéristique de l'invention, la structure intermédiaire supporte en partie au moins les moyens destinés à empêcher l'accrochage de fourrage à ladite structure intermédiaire.

Selon une caractéristique supplémentaire, la structure intermédiaire supporte le timon qui permet d'atteler la faucheuse à un véhicule tracteur.

Selon une autre caractéristique supplémentaire, la structure intermédiaire supporte une partie au moins du mécanisme de transmission du mouvement.

La structure intermédiaire est ainsi un sous-ensemble de la faucheuse sur lequel on a regroupé un grand nombre d'organes remplissant des fonctions importantes.

D'autres caractéristiques et avantages de l'invention apparaîtront dans la description suivante de quelques exemples non limitatifs de réalisation de l'invention, faite à la lumière du dessin annexé sur lequel,

- La figure 1 représente une vue en plan d'une faucheuse-conditionneuse selon l'invention,
- La figure 2 représente une vue latérale du corps de la faucheuse-conditionneuse de la figure 1 équipée d'un premier exemple de moyens destinés à empêcher l'accrochage de fourrage à la structure intermédiaire,
- La figure 3 représente une vue partielle de devant du corps de la faucheuse de la figure 2,
- La figure 4 représente une vue latérale du corps de la faucheuse-conditionneuse de la figure 1 équipée d'un deuxième exemple de moyens destinés à empêcher l'accrochage de fourrage à la structure intermédiaire,
- La figure 5 représente une vue partielle de dessus du corps de la faucheuse de la figure 4,
- La figure 6 représente une vue partielle de devant du corps de la faucheuse des figures 4 et 5,
- La figure 7 représente une vue latérale du corps de la faucheuse-conditionneuse de la figure 1 équipée d'un troisième exemple de moyens destinés à empêcher l'accrochage de fourrage à la structure intermédiaire,

0184533

- La figure 8 représente une vue partielle de devant du corps de la faucheuse de la figure 7,
- La figure 9 représente une vue latérale du corps de la faucheuse-conditionneuse de la figure 1 équipée d'un quatrième exemple de moyens destinés à empêcher l'accrochage de fourrage à la structure intermédiaire,
- La figure 10 représente une vue partielle de devant, à une échelle agrandie, de la structure intermédiaire de la faucheuse de la figure 9.

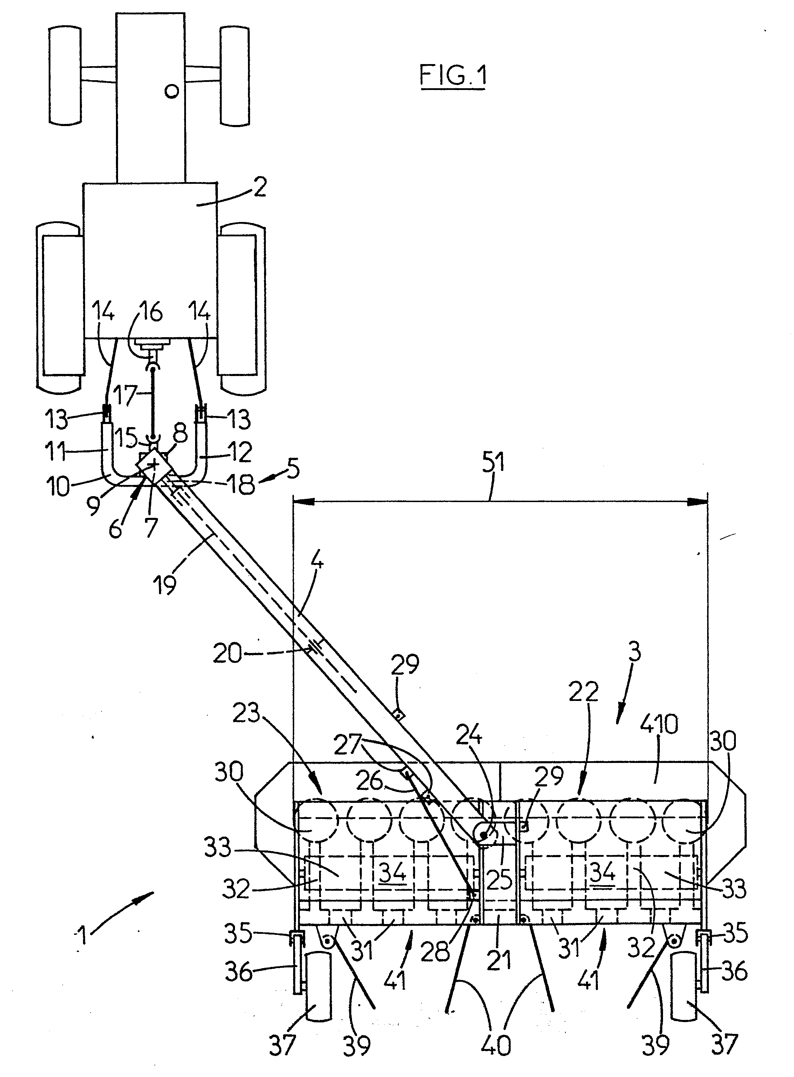

La figure 1 montre une faucheuse (1) selon l'invention accouplée à un tracteur (2). La faucheuse (1) se compose d'un corps (3) et d'un timon (4). A sa partie frontale (5), le timon (4) est muni d'un dispositif de transmission (6) connu de l'homme de l'art. Ce dispositif de transmission (6) comporte un carter supérieur (7) et un carter inférieur (8), qui peuvent tourner l'un par rapport à l'autre autour d'un axe (9) dirigé vers le haut. Le dispositif (6) comporte en sus un cadre (10) lié en rotation au carter inférieur (8). Le cadre (10) comporte à l'extrémité libre de chacune de ses branches (11, 12) une chape (13) qui permet de relier le cadre (10) aux bras inférieurs (14) du tracteur (2).

Le carter inférieur (8) supporte au moins un arbre d'entrée (15) qui est relié à l'arbre de prise de force (16) du tracteur (2) au moyen d'un arbre à joints universels (17), tandis que le carter supérieur (7) supporte un arbre de sortie (18). A l'intérieur du dispositif de transmission (6), le ou les arbres d'entrée (15) sont reliés à l'arbre de sortie (18) au moyen d'organes de transmission connus de l'homme de l'art.

L'arbre de sortie (18) transmet le mouvement aux organes de travail de la faucheuse (1) par l'intermédiaire d'un arbre de transmission (19) lié en rotation audit arbre de sortie (18). Préférentiellement, l'arbre de transmission (19) est logé à l'intérieur du timon (4). Compte tenu de la grande longueur de l'arbre de transmission (19), celui-ci est maintenu par le timon (4) au moyen d'au moins un palier (20).

9

Le corps (3) de la faucheuse (1) est formé par trois sous-ensembles principaux : une structure intermédiaire (21) et deux groupes faucheurs (22, 23) situés respectivement de part et d'autre de ladite structure intermédiaire (21).

A son extrémité arrière, le timon (4) est lié à la structure intermédiaire (21) au moyen d'une articulation dont l'axe (24) est dirigé vers le haut. A cet effet, la structure intermédiaire (21) comporte une chape (25).

Grâce à cette articulation, le timon (4) peut pivoter par rapport à la structure intermédiaire (21) de sorte qu'il puisse prendre différentes positions de travail et de transport par rapport à ladite structure intermédiaire (21).

La position du timon (4) par rapport à la structure intermédiaire (21) est déterminée par des moyens (26, 27, 28, 29) appropriés.

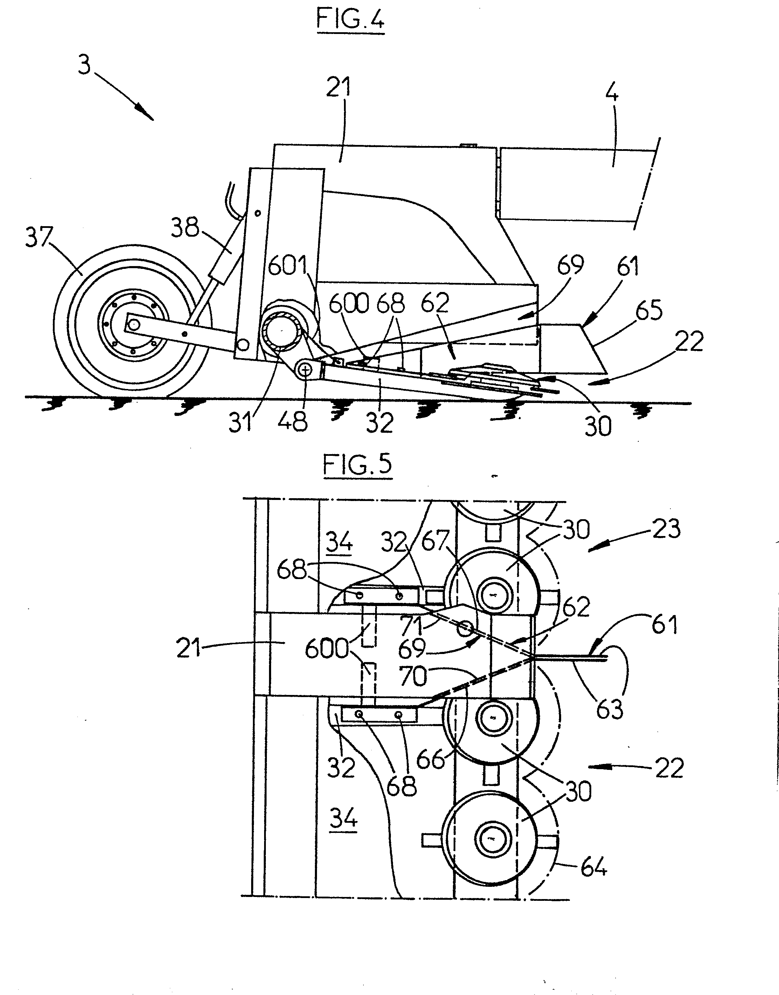

Chaque groupe faucheur (22, 23) comporte, de manière non limitative, quatre têtes de coupe (30) qui sont reliées chacune à un support (31) au moyen d'un bras (32). Il est aussi possible dans le cadre de l'invention que plusieurs têtes de coupe (30) soient reliées entre elles et que l'ensemble de ces têtes de coupe (30) soit relié au support (31) au moyen d'au moins un bras (32) (voir figures 4, 5, 6). Sur la figure 1, on voit encore que chaque groupe faucheur (22, 23) supporte en sus des organes de conditionnement (33). L'ensemble têtes de coupe (30) – organes de conditionnement (33) forme ainsi ce que l'on appelle un groupe faucheur-conditionneur.

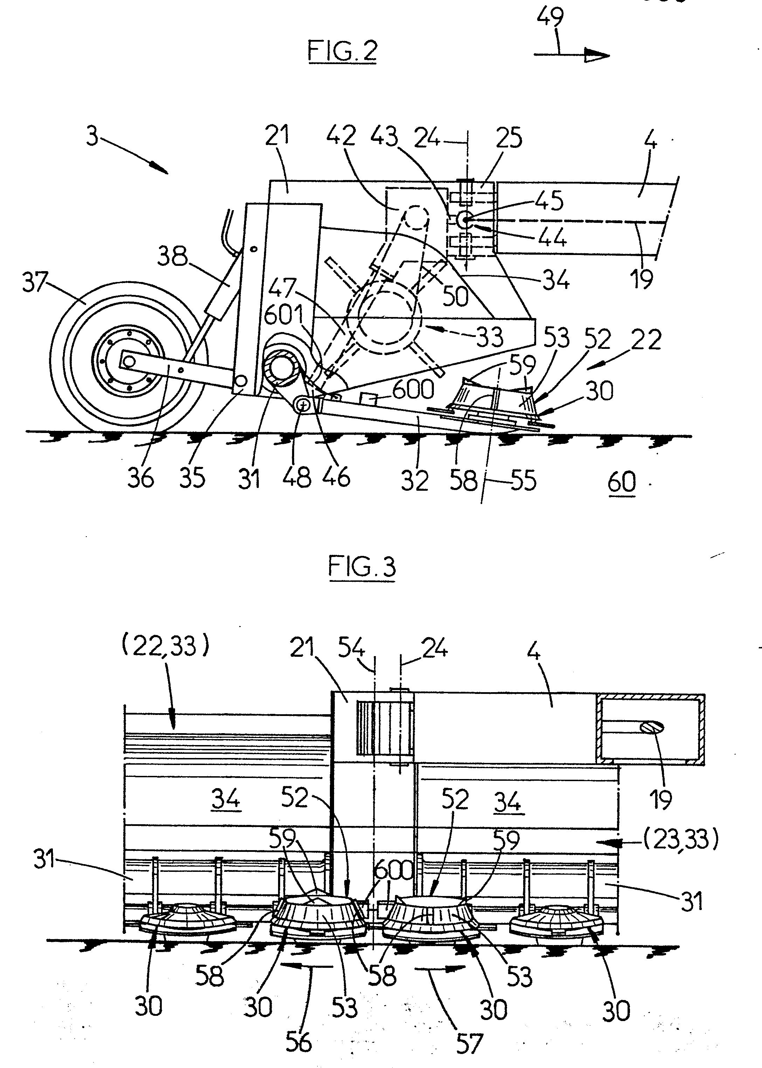

Chaque groupe faucheur-conditionneur (22, 33) et (23, 33) s'étend sous un capot (34). A l'arrière de son extrémité libre, chaque groupe faucheur-conditionneur (22, 33) et (23, 33) comporte une chape (35) dans laquelle est articulé un bras (36) à l'extrémité libre duquel est fixée une roue (37). Grâce à ces articulations, la position de chaque roue (37) peut être modifiée par rapport au groupe faucheur-conditionneur (22, 33) et (23, 33) correspondant, à l'aide des moyens extensibles et rétractables (38) (voir figures 2, 4, 7, 9). Ceci permet de maintenir les groupes faucheurs-conditionneurs (22, 33) et (23, 33) près du sol pendant le travail et loin du sol lorsque le fauchage doit être interrompu ou pendant le transport.

Chaque groupe faucheur-conditionneur (22, 33) et (23, 33) comporte en sus à sa partie arrière des dispositifs d'andainage (39, 40) dont la position est de préférence réglable par rapport à l'ouverture de sortie (41) par où sort le produit récolté. Ce réglage de la position des dispositifs d'andainage (39, 40) permet le calibrage de l'andain de produit récolté.

Chaque groupe faucheur-conditionneur (22, 33) et (23, 33) constitue ainsi une unité de largeur réduite qui est montée sur la structure intermédiaire (21) à l'aide de moyens appropriés.

L'ensemble ainsi monté, formé par la structure intermédiaire (21) et les groupes faucheurs-conditionneurs (22, 33) et (23, 33), constitue le corps (3) de la faucheuse qui dans ce cas est, ce que l'on appelle une faucheuse-conditionneuse. Le corps (3) de cette faucheuse roule sur le sol par l'intermédiaire des roues (37). L'entraînement en rotation des têtes de coupe (30) et des organes de conditionnement (33) est produit par l'arbre de transmission (19) et un mécanisme de transmission logé dans le corps (3) de la faucheuse.

Sur la figure 1, on voit aussi que la faucheuse comporte un dispositif de protection (410) qui freine les projections de corps durs pouvant être lancés par les têtes de coupe (30).

La figure 2 montre une vue latérale de la faucheuse de la figure 1. Le dispositif de protection (410), de même que les dispositifs d'andainage (39, 40) ont été enlevés pour une meilleure clarté de la figure.

Sur cette figure, on voit schématiquement le mécanisme de transmission logé dans le corps (3) de la faucheuse et supporté par la structure intermédiaire (21). Ce mécanisme se compose tout d'abord d'un carter d'entrée (42) supportant un arbre d'entrée (43). L'arbre d'entrée (43) est relié à l'extrémité arrière de l'arbre de transmission (19) au moyen d'un joint universel (44) qui est de préférence homocinétique. Le centre (45) du joint (44) se situe de préférence sensiblement sur l'axe (24) autour duquel peut pivoter le timon (4) par rapport à la structure intermédiaire (21). Le carter d'entrée (42) commande un carter de distribution (46) par l'intermédiaire d'un arbre logé à l'intérieur d'un tube entretoise (47) reliant le carter de distribution (46) au carter d'entrée (42). Le carter de distribution (46) distribue le mouvement aux têtes de coupe (30) notamment par l'intermédiaire de moyens de transmission logés dans les bras (32) et qui entraînent les têtes de coupe (30) par en-dessous. Ces têtes de coupe sont liées au support (31) de manière à pouvoir pivoter autour d'un axe (48) dirigé transversalement par rapport à la direction de travail (49).

Le carter d'entrée (42) commande par ailleurs le mouvement des organes de conditionnement (33) par l'intermédiaire d'organes de transmission tels que la chaîne (50) par exemple.

Comme dit plus haut, les groupes faucheurs-conditionneurs (22, 33) et (23, 33) s'étendent de part et d'autre de la structure intermédiaire (21). Cette dernière se trouve donc à l'intérieur de la largeur de coupe (51) (voir figure 1) définie par les groupes faucheurs (22, 23), de sorte que le fourrage coupé doit passer de part et d'autre de ladite structure intermédiaire (21) pour subir l'action des organes de conditionnement (33) et pour être déposé derrière la faucheuse.

Afin que le fourrage coupé puisse bien passer de part et d'autre de la structure intermédiaire (21), l'invention prévoit l'agencement de moyens destinés à empêcher l'accrochage de fourrage à ladite structure intermédiaire (21).

Sur les figures 2 et 3, on a représenté un premier exemple de réalisation de tels moyens qui comportent des moyens animés d'entraînement du fourrage (52). Ces moyens animés d'entraînement (52) sont constitués par des tambours animés (53) qui dans l'exemple, ont la forme d'un tronc de cône. Ces tambours animés (53) s'étendent au-dessus des têtes de coupe (30) qui s'étendent dans le voisinage de la structure intermédiaire (21) et qui font partie des groupes faucheurs (22, 23) respectivement.

Sur les figures 2 et 3, on voit que les tambours (53) s'étendent en partie sous la structure intermédiaire (21) et dans le voisinage avant de celle-ci. Par ailleurs, les tambours (53) s'étendent aussi de part et d'autre du plan vertical de symétrie (54) de la structure intermédiaire (21), comme cela apparaît sur la figure 3.

Les tambours (53) sont fixés sur les têtes de coupe (30) et tournent à la même vitesse et autour du même axe de rotation (55) que lesdites têtes de coupe (30). Les sens de rotation de ces têtes de coupe (30) et des tambours (53) qui les surmontent, sont indiqués par les flèches (56, 57) et on voit que les sens de rotation divergent vers l'avant.

Dans le but d'augmenter l'efficacité des tambours (53), ceux-ci sont munis de moyens qui augmentent leur agressivité. Ces moyens sont dans l'exemple représenté, constitués par des barrettes (58) qui sont agencées sur la surface extérieure des tambours (53) et par des cornes (59) agencées sur le dessus desdits tambours (53).

Ces moyens destinés à empêcher l'accrochage de fourrage à la structure intermédiaire (21) fonctionnent de la manière suivante.

Le fourrage coupé par les têtes de coupe (30) situées de part et d'autre de la structure intermédiaire (21), est entraîné par les tambours (53) qui les surmontent, dans le sens des flèches (56) et (57). Ainsi, en regardant la faucheuse de devant (voir figure 3), le fourrage coupé par la tête de coupe (30) située près de la structure intermédiaire (21) et appartenant au groupe faucheur (22), est entraîné vers la gauche de la structure intermédiaire (21), tandis que le fourrage coupé par la tête de coupe (30) située près de la structure intermédiaire (21) et appartenant au groupe faucheur (23), est entraîné vers la droite de la structure intermédiaire (21). De cette sorte, le flux de fourrage coupé par les têtes de coupe (30) est séparé en deux et chaque moitié de flux passe à côté de la structure intermédiaire (21) sans que du fourrage puisse y rester accroché.

Comme dit plus haut, les têtes de coupe (30) peuvent pivoter autour de l'axe (48) dirigé transversalement à la direction de travail (49), ceci pour pouvoir suivre les irrégularités que présente le sol (60). Pour que lors du pivotement vers le haut, les tambours (53) ne puissent pas entrer en collision avec la structure intermédiaire (21), ledit pivotement des têtes de coupe (30) donc des tambours (53) est limité vers le haut par des butées (600). Ces butées (600) sont dans l'exemple constituées par des index qui sont fixés sur les bras (32) des organes de coupe (30) situés dans le voisinage de la structure intermédiaire (21), et qui s'étendent sous cette dernière. Le pivotement des bras (32) correspondant à ces organes de coupe (30) est ainsi stoppé dès que les index touchent le dessous de la structure intermédiaire (21).

Le pivotement des bras (32) est également limité vers le bas par des butées (601).

Les figures 4, 5 et 6 représentent un deuxième exemple de réalisation de moyens destinés à empêcher l'accrochage de fourrage à la structure intermédiaire (21). Ces moyens se composent de moyens de séparation du fourrage (61) et de moyens de guidage du fourrage (62).

Les moyens de séparation (61) sont constitués dans l'exemple par deux surfaces (63) qui s'étendent pour l'essentiel devant la ligne de coupe (64) des têtes de coupe (30). Ces surfaces de séparation (63) s'étendent dans un plan non horizontal. (Dans l'exemple elles s'étendent sensiblement dans le plan vertical de symétrie (54) de la structure intermédiaire (21)).

A l'avant, les surfaces de séparation (63) comportent une arête frontale (65) qui s'étend vers l'arrière et vers le haut.

Les moyens de guidage (62) sont constitués dans l'exemple par deux surfaces (66, 67) non horizontales qui s'étendent l'une près de l'autre à l'avant et qui divergent vers l'arrière. Dans l'exemple, les deux surfaces de guidage (66, 67) s'étendent dans des plans sensiblement verticaux et symétriques par rapport au plan vertical de symétrie (54) de la structure intermédiaire (21). A l'avant, les surfaces de guidage (66, 67) se raccordent aux surfaces de séparation (63).

Les surfaces de séparation (63) sont chacune constituées par une tôle plane. Ces tôles planes s'étendent parallèlement et très près l'une de l'autre. Les surfaces de guidage (66, 67) sont également chacune constituées par une tôle plane. Ces tôles de guidage se raccordent chacune à l'avant à une tôle de séparation. Chaque ensemble tôle de séparation et tôle de guidage qui s'y raccorde, est fixé à l'aide de moyens de fixation (68) sur un bras (32) qui relie les têtes de coupe (30) au support (31). Chaque ensemble tôle de séparation et tôle de guidage pivote donc conjointement avec le bras (32) et les têtes de coupe (30) qui y sont fixées. Ceci évite d'endommager ces ensembles et permet de maintenir la position relative entre ces ensembles et les têtes de coupe (30) pendant le pivotement.

Par ailleurs, pour éviter que ces ensembles et notamment les surfaces de guidage (66, 67) ne butent sur la structure intermédiaire (21) lorsqu'elles pivotent vers le haut, le pivotement des bras (32) est limité vers le haut par des butées (600). Comme dans l'exemple précédent, le pivotement des bras (32) est également limité vers le bas par des butées (601). Pendant ce pivotement, les deux tôles de séparation restent sensiblement parallèles l'une à l'autre.

Afin qu'il ne puisse pas se former un espace trop important entre ces moyens destinés à empêcher l'accrochage de fourrage à la structure intermédiaire (21), et la structure intermédiaire (21), quand les têtes de coupe (30) ont pivoté vers le bas, la structure intermédiaire (21) comporte sur sa face en regard des surfaces de guidage (66, 67) des moyens d'obturation (69) constitués dans l'exemple par deux surfaces (70, 71) qui s'étendent l'une près de l'autre à l'avant et qui divergent vers l'arrière. Ces deux surfaces (70, 71) s'étendent sensiblement parallèlement aux surfaces de guidage (66, 67) et à l'intérieur du coin formé par ces dernières.

Ce deuxième exemple de réalisation de moyens destinés à empêcher l'accrochage de fourrage à la structure intermédiaire (21) fonctionne de la manière suivante.

Les moyens de séparation (61) constitués par les surfaces de séparation (63), séparent le fourrage avant que celui-ci ne soit coupé par les têtes de coupe (30) qui s'étendent dans le voisinage de la structure intermédiaire (21). Ces brins de fourrage qui ont alors leur pied dans la zone de travail du groupe faucheur-conditionneur (22, 33) et leur tête dans la zone de travail du groupe faucheur-conditionneur (23, 33), et vice versa, ce que l'on nomme du fourrage versé, sont alors dans une certaine mesure redressés avant d'être coupés par les têtes de coupe (30). Cette séparation est facilitée par le fait que l'arête frontale (65) est dirigée vers l'arrière et vers le haut. L'entraînement du fourrage coupé vers l'arrière est produit par les têtes de coupe (30) elles-mêmes, et est facilité par les moyens de guidage (62) constitués par les surfaces de guidage (66, 67), lesquelles canalisent bien le fourrage autour de la structure intermédiaire (21).

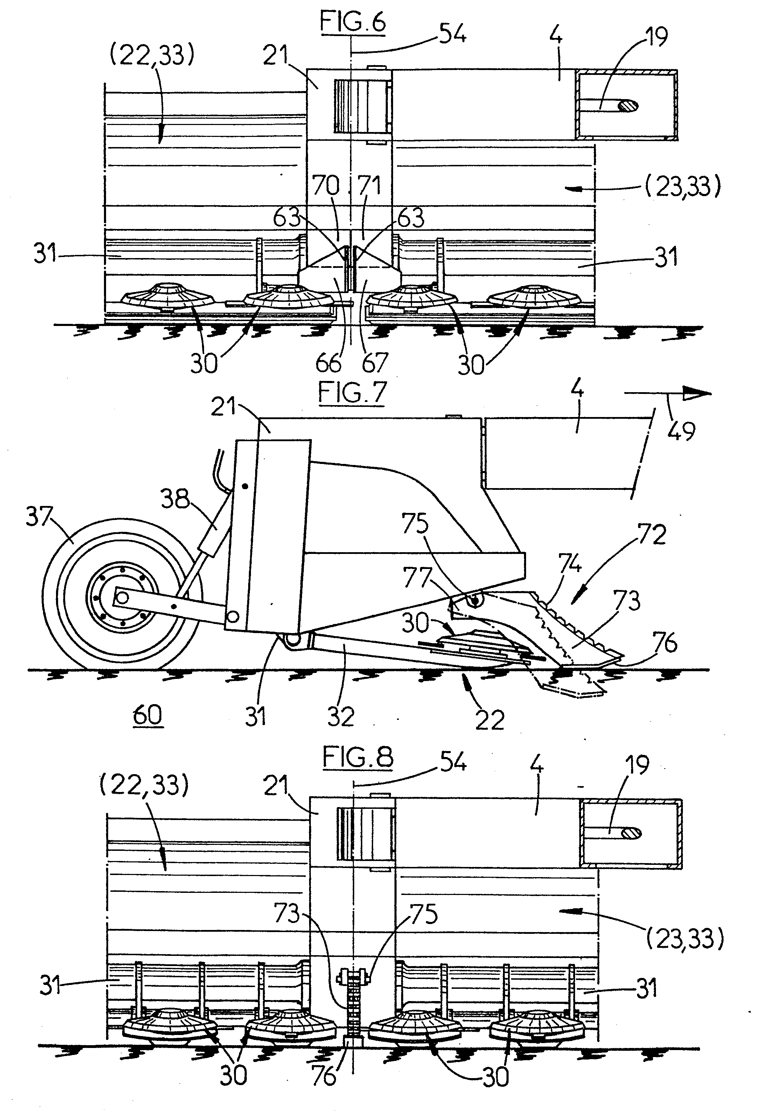

Les figures 7 et 8 montrent un troisième exemple de réalisation de moyens destinés à empêcher l'accrochage de fourrage à la structure intermédiaire (21). Ces moyens sont constitués par un moyen de séparation (72) comportant un dispositif coupant. Ce dispositif coupant est constitué par un couteau (73) dont l'arête tranchante (74) est dirigée vers l'avant. Cette arête tranchante (74) s'étend vers l'arrière et vers le haut, et se situe pour l'essentiel devant la ligne de coupe des têtes de coupe (30). Elle se situe par ailleurs sensiblement dans le plan vertical de symétrie (54) de la structure intermédiaire (21), entre les deux têtes de coupe (30) agencées dans le voisinage de la structure intermédiaire (21).

Le couteau (73) est fixé sur la structure intermédiaire (21) au moyen d'une articulation (75) d'axe dirigé transversalement à la direction de travail (49). Le couteau (73) s'appuie par ailleurs sur le sol (60) au moyen d'un organe de glissement (76) dont la partie avant est dirigée vers le haut. Grâce à cet organe de glissement (76), le couteau (73) peut suivre les irrégularités du sol (60) sans être endommagé.

Afin de limiter le pivotement du couteau (73) vers le bas lorsqu'il passe au-dessus d'un trou ou lorsqu'on relève le corps (3) de la faucheuse, le couteau (73) est muni d'une excroissance (77) qui vient en contact avec la structure intermédiaire (21) lorsque l'angle limite de pivotement vers le bas est atteint (la position basse limite du couteau (73) a été représentée en traits mixtes).

Ce moyen destiné à empêcher l'accrochage de fourrage à la structure intermédiaire (21) fonctionne de la manière suivante.

L'arête tranchante (74) sépare les brins de fourrage versés qui se présentent devant la structure intermédiaire (21) en les coupant en deux. Les têtes de coupe (30) peuvent ensuite couper ces brins et les entraîner facilement vers l'arrière sans que lesdits brins ne puissent rester accrochés à la structure intermédiaire (21).

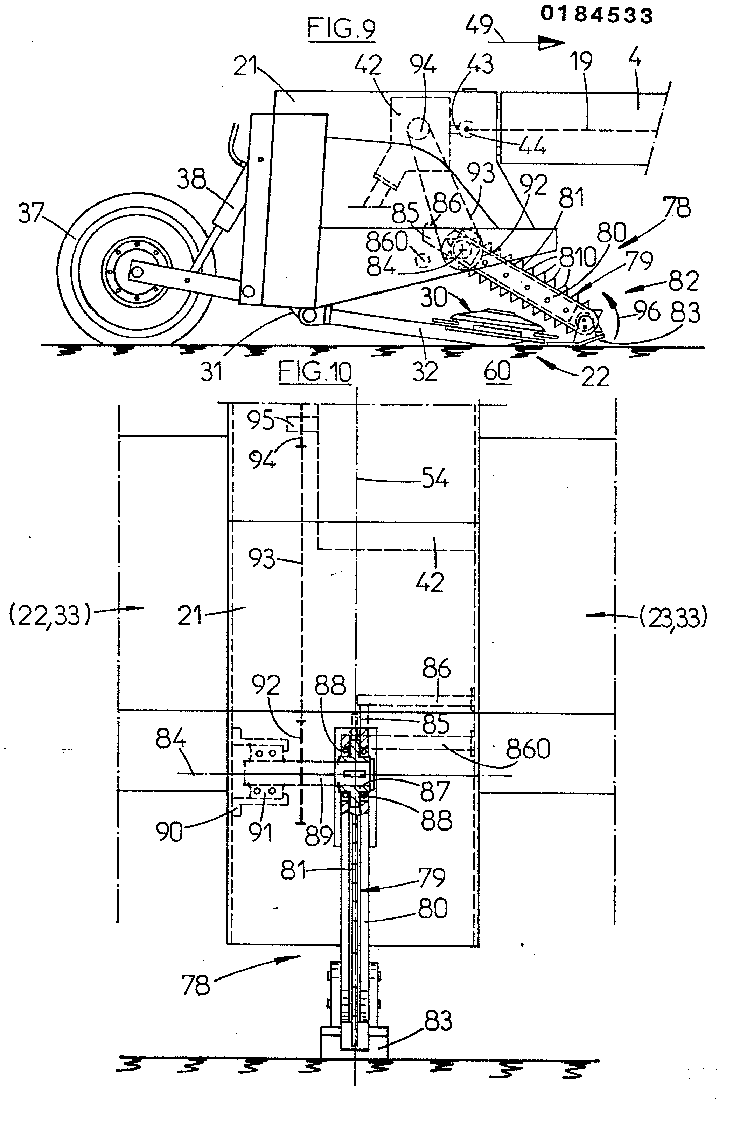

Les figures 9 et 10 montrent un quatrième exemple de réalisation de moyens destinés à empêcher l'accrochage de fourrage à la structure intermédiaire (21). Ces moyens sont constitués par un moyen de séparation (78) comportant un dispositif coupant animé. Ce dispositif coupant animé est constitué par une scie (79).

Cette scie (79) est composée par un plateau (80) sur lequel tourne une chaîne sans fin (81) qui comporte une suite de dents (810).

La scie (79) s'étend sensiblement dans le plan vertical de symétrie (54) de la structure intermédiaire (21). La partie avant (82) du plateau (80) sur laquelle s'enroule la chaîne sans fin (81) équipée des dents (810), s'étend devant la ligne de coupe des têtes de coupe (30). Cette partie avant (82) est munie d'un organe de glissement (83) par l'intermédiaire duquel la scie (79) s'appuie sur le sol (60). Cet organe de glissement (83) est agencé de telle sorte qu'il n'empêche pas la scie (79) de couper dans la partie avant (82) de celle-ci.

La partie arrière de la scie (79) pénètre à l'intérieur de la structure intermédiaire (21) et y est liée au moyen d'une articulation d'axe (84) dirigé transversalement à la direction de travail (49). Le plateau (80) comporte une excroissance (85) qui bute sur une butée (86) solidaire de la structure intermédiaire (21). La butée (86) peut être réglée pour définir la position normale de travail de la scie (79). Après ce réglage, la scie (79) ne peut que pivoter vers le haut autour de l'axe (84). La butée (86) condamne donc le pivotement de la scie (79) vers le bas. La structure intermédiaire (21) est munie par ailleurs d'une deuxième butée (860) qui, conjointement avec l'excroissance (85), limite le pivotement de la scie (79) vers le haut. Ceci évite une interférence entre la scie (79) et la structure intermédiaire (21).

A la partie arrière, la scie (79) comporte un pignon d'entraînement (87) de la chaîne sans fin (81), qui tourne autour de l'axe (84) autour duquel peut pivoter la scie (79). A cet effet, l'extrémité arrière du plateau (80) forme une chape dans laquelle le pignon (87) est guidé en rotation au moyen de deux roulements (88). Le pignon (87) est par ailleurs lié en rotation et en translation à l'extrémité d'un arbre (89) dont l'axe longitudinal est confondu avec l'axe (84). L'autre extrémité de l'arbre (89) est guidée en rotation dans un palier (90) au moyen d'un roulement (91), et est liée en translation à ce palier (90) qui est lui-même lié rigidement à la structure intermédiaire (21).

Entre le pignon (87) et le palier (90), l'arbre (89) est lié en rotation à une roue dentée (92) sur laquelle s'enroule un organe de transmission sans fin (93). Cet organe de transmission sans fin (93) s'enroule sur une autre roue dentée (94) liée en rotation à un arbre de sortie (95) du carter d'entrée (42). L'entraînement du pignon (87) se fait de telle manière que la chaîne sans fin (81) munie des dents (810) tourne dans le sens défini par la flèche (96).

Avec ce mode de construction, on voit que la scie (79) peut pivoter autour de l'axe (84) pour suivre les irrégularités du sol (60) sans que l'entraînement continu de la chaîne sans fin (81) munie des dents (810) ne soit perturbé.

Le moyen de séparation (78) à dispositif coupant qui vient d'être décrit, fonctionne d'une manière similaire à celui des figures 7 et 8, sauf que la coupe s'effectue par un dispositif de coupe animé.

Comme la chaîne sans fin (81) à dents (810) tourne dans le sens de la flèche (96), c'est-à-dire dans sa zone de coupe, vers l'arrière et vers le haut, l'effet de coupe et de redressement des brins de fourrage versé est plus efficace.

Alors que dans la description ci-dessus, on vient de décrire quatre exemples de réalisation de moyens destinés à empêcher l'accrochage de fourrage à la structure intermédiaire (21), on comprendra qu'on ne sortira pas du cadre de l'invention en combinant entre eux deux ou plusieurs de ces exemmples.

De même, on ne sortira pas du cadre de l'invention si on apporte diverses modifications ou améliorations à ces exemples de réalisation.

**0184533**

REVENDICATIONS

1. Faucheuse comportant des organes de coupe supportés par un châssis, caractérisée par le fait que le châssis est muni d'une structure intermédiaire (21) destinée à supporter en partie au moins les organes de coupe (30) qui s'étendent de part et d'autre de ladite structure intermédiaire (21), et que dans le voisinage de la structure intermédiaire (21) sont agencés des moyens (52, 61, 62, 69, 72, 78) destinés à empêcher l'accrochage de fourrage à la structure intermédiaire (21).

2. Faucheuse comportant des organes de coupe et des organes de travail supplémentaires supportés par un châssis, caractérisée par le fait que le châssis est muni d'une structure intermédiaire (21) destinée à supporter en partie au moins les organes de coupe (30) et/ou les organes de travail supplémentaires (33), lesdits organes de coupe (30) et lesdits organes de travail supplémentaires (33) s'étendant de part et d'autre de ladite structure intermédiaire (21), et que dans le voisinage de la structure intermédiaire (21) sont agencés des moyens (52, 61, 62, 69, 72, 78) destinés à empêcher l'accrochage de fourrage à ladite structure intermédiaire (21).

3. Faucheuse selon l'une des revendications 1 ou 2, caractérisée par le fait que les mcyens (52, 61, 62, 69, 72, 78) destinés à empêcher l'accrochage de fourrage à la structure intermédiaire (21) s'étendent sensiblement en partie au moins sous la structure intermédiaire (21).

4. Faucheuse selon l'une des revendications 1 à 3, caractérisée par le fait que les moyens (52, 61, 62, 69, 72, 78) destinés à empêcher l'accrochage de fourrage à la structure intermédiaire (21), s'étendent dans le voisinage avant de la structure intermédiaire (21).

5. Faucheuse selon l'une des revendications 1 à 4, caractérisée par le fait que la zone d'action des moyens (52, 61, 62, 69, 72, 78) destinés à empêcher l'accrochage de fourrage à la structure intermédiaire (21), est située en partie au moins sensiblement à l'avant de la ligne de coupe (64) des organes de coupe (30).

6. Faucheuse selon l'une des revendications 1 à 5, caractérisée par le fait que les moyens (52, 61, 62, 69, 72, 78) destinés à empêcher l'accrochage de fourrage à la structure intermédiaire (21), s'étendent sensiblement en partie au moins dans le plan vertical de symétrie (54) de la structure intermédiaire (21).

7. Faucheuse selon l'une des revendications 1 à 5, caractérisée par le fait que les moyens (52, 61, 62, 69, 72, 78) destinés à empêcher l'accrochage de fourrage à la structure intermédiaire (21), s'étendent en partie au moins de part et d'autre du plan vertical de symétrie (54) de la structure intermédiaire (21).

8. Faucheuse selon l'une des revendications 1 à 7, caractérisée par le fait que les moyens (52, 61, 62, 72, 78) destinés à empêcher l'accrochage de fourrage à la structure intermédiaire (21) sont fixés sur la faucheuse de manière à pouvoir pivoter au moins vers le haut.

9. Faucheuse selon la revendication 8, caractérisée par le fait que les moyens (52, 61, 62, 72, 78) destinés à empêcher l'accrochage de fourrage à la structure intermédiaire (21), pivotent autour d'un axe (48, 75, 84) dirigé transversalement à la direction de travail (49) de la faucheuse.

10. Faucheuse selon l'une des revendications 8 ou 9, caractérisée par le fait que le pivotement des moyens (52, 61, 62, 72, 78) destinés à empêcher l'accrochage de fourrage à la structure intermédiaire (21), peut être condamné ou est limité vers le bas.

11. Faucheuse selon l'une des revendications 8 à 10, caractérisée par le fait que le pivotement des moyens (52, 61, 62, 72, 78) destinés à empêcher l'accrochage de fourrage à la structure intermédiaire (21), est limité vers le haut.

12. Faucheuse selon l'une des revendications 8 à 11,

21 . 0184533

caractérisée par le fait que les moyens (52, 61, 62, 72, 78) comportent des organes (32, 76, 83) par l'intermédiaire desquels ils s'appuient au moins momentanément sur le sol (60).

13. Faucheuse selon l'une des revendications 1 à 12, caractérisée par le fait que les moyens destinés à empêcher l'accrochage de fourrage à la structure intermédiaire (21) comportent des moyens animés d'entraînement du fourrage (52).

14. Faucheuse selon la revendication 13, caractérisée par le fait que les moyens animés d'entraînement du fourrage (52) tournent autour d'au moins un axe dirigé vers le haut.

15. Faucheuse selon l'une des revendications 13 ou 14, caractérisée par le fait que les moyens animés d'entraînement du fourrage (52) sont agencés en partie au moins sensiblement au-dessus de l'un au moins des organes de coupe situés dans le voisinage de la structure intermédiaire (21).

16. Faucheuse selon la revendication 15, caractérisée par le fait qu'un organe de coupe s'étend de part et d'autre du plan vertical de symétrie (54) de la structure intermédiaire (21), et que sensiblement au-dessus de chacun de ces organes de coupe sont agencés en partie au moins des moyens animés d'entraînement du fourrage (52).

17. Faucheuse selon l'une des revendications 15 ou 16, caractérisée par le fait que l'organe de coupe (30) est rotatif, et que les moyens animés d'entraînement du fourrage (52) tournent avec cet organe de coupe (30) au-dessus duquel ils sont agencés en partie au moins.

18. Faucheuse selon la revendication 17, caractérisée par le fait que les moyens animés d'entraînement du fourrage (52) tournent au moins partiellement sensiblement autour du même axe (55) que l'organe de coupe au-dessus duquel ils s'étendent en partie au moins.

19. Faucheuse selon l'une des revendications 17 ou 18, caractérisée par le fait que les moyens animés d'entraînement du fourrage (52) tournent sensiblement à la même vitesse que l'organe de coupe au-dessus duquel ils s'étendent en partie au moins.

20. Faucheuse selon l'une des revendications 13 à 19, caractérisée par le fait que les moyens d'entraînement du fourrage (52) comportent au moins un tambour animé (53).

21. Faucheuse selon la revendication 20, caractérisée par le fait que le tambour (53) est muni de moyens (58, 59) qui augmentent son agressivité.

22. Faucheuse selon l'une des revendications 20 ou 21, caractérisée par le fait que le tambour (53) a une forme de tronc de cône.

23. Faucheuse selon l'une des revendications 1 à 22, caractérisée par le fait que les moyens destinés à empêcher l'accrochage de fourrage à la structure intermédiaire, comportent des moyens de séparation du fourrage (61, 72, 78).

24. Faucheuse selon la revendication 23, caractérisée par le fait que les moyens de séparation du fourrage (61, 72, 78) s'étendent de préférence jusque devant la ligne de coupe (64) des organes de coupe (30).

25. Faucheuse selon l'une des revendications 23 ou 24, caractérisée par le fait que les moyens de séparation du fourrage sont liés aux organes de coupe (30) qui sont situés dans le voisinage de la structure intermédiaire (21) et qui peuvent, d'une manière connue en soi, pivoter vers le haut et vers le bas autour d'un axe (48) dirigé transversalement à la direction de travail (49) de la faucheuse.

26. Faucheuse selon l'une des revendications 23 à 25, caractérisée par le fait que les moyens de séparation du fourrage (72, 78) comportent un dispositif coupant.

27. Faucheuse selon la revendication 26, caractérisée par le fait que les moyens de séparation (72) sont constitués par un couteau (73) dont l'arête tranchante

23    **0184533**

(74) est dirigée vers l'avant.

28. Faucheuse selon l'une des revendications 26 ou 27, caractérisée par le fait que le dispositif coupant est animé.

29. Faucheuse selon la revendication 28, caractérisée par le fait que le dispositif coupant animé comporte au moins une suite de dents animées (810).

30. Faucheuse selon l'une des revendications 23 à 25, caractérisée par le fait que les moyens de séparation du fourrage sont constitués par au moins une surface (63) ayant une arête frontale (65).

31. Faucheuse selon l'une des revendications 27, 29 ou 30, caractérisée par le fait que l'arête tranchante (74), la ou les suites de dents (810), ou l'arête frontale (65) s'étendent vers l'arrière et vers le haut.

32. Faucheuse selon l'une des revendications 1 à 31, caractérisée par le fait que les moyens destinés à empêcher l'accrochage de fourrage à la structure intermédiaire (21), comportent des moyens de guidage du fourrage (62).

33. Faucheuse selon la revendication 32, caractérisée par le fait que les moyens de guidage (62) sont constitués par deux surfaces (66, 67) non horizontales qui s'étendent l'une près de l'autre à l'avant et qui divergent vers l'arrière.

34. Faucheuse selon la revendication 30 et la revendication 33, caractérisée par le fait qu'à l'avant les surfaces de guidage (66, 67) se raccordent sensiblement aux surfaces de séparation (63).

35. Faucheuse selon l'une des revendications 32 à 34, caractérisée par le fait que les moyens de guidage (62) pivotent autour d'un axe (48) dirigé transversalement à la direction de travail (49) de la faucheuse, et que l'espace entre lesdits moyens de guidage (62) et la structure intermédiaire (21) est au moins partiellement obturé par des moyens d'obturation (69).

36. Faucheuse selon la revendication 35, caractérisée par le fait que les moyens d'obturation (69) sont constitués par deux surfaces (70, 71) non horizontales qui s'étendent l'une près de l'autre à l'avant et qui divergent vers l'arrière.

37. Faucheuse selon la revendication 36 et la revendication 33 ou 34, caractérisée par le fait que les surfaces d'obturation (70, 71) s'étendent au moins partiellement entre les surfaces de guidage (66, 67).

38. Faucheuse selon l'une des revendications 1 à 37, caractérisée par le fait que la structure intermédiaire (21) supporte en partie au moins les moyens (52, 61, 62, 69, 72, 78) destinés à empêcher l'accrochage de fourrage à la structure intermédiaire (21).

39. Faucheuse selon l'une des revendications 1 à 38, caractérisée par le fait que la structure intermédiaire (21) supporte le timon (4) qui permet de relier la machine à un véhicule tracteur (2).

40. Faucheuse selon l'une des revendications 1 à 39, caractérisée par le fait que la structure intermédiaire (21) supporte une partie au moins du mécanisme de transmission de mouvement (42, 46) logé dans le corps (3) de la faucheuse.

41. Faucheuse selon l'une des revendications 1 à 40, caractérisée par le fait que l'un au moins des organes de coupe (30) est entraîné par le bas.

0184533

FIG.1

0184533

## FIG. 2

## FIG. 3

0184533

FIG.4

FIG.5

FIG.6

FIG.7

60

FIG.8

0184533

FIG.9

49

FIG.10

**0184533**

Numero de la demande

**RAPPORT DE RECHERCHE EUROPEENNE**

Office européen
des brevets

EP    85 44 0066

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| X | GB-A-1 604 341   (PATENT CONCERN N.V.)  * page 1, lignes 49-57, page 2, lignes 18-27, page 3, lignes 119-129; figures 1,2 * | 1,3,5, 13-22, 32,39 | A 01 D    34/66 |
| Y | | 4,6-12 ,23-31 ,33,34 ,38,40 ,41 | |
| A | | 36,37 | |
| X | US-A-3 979 889  (M.G. VANSTEELANT)  * colonne 4, ligne 48 - colonne 5, ligne 31, colonne 6, ligne 65 - colonne 7, ligne 3; figures 1,2,3 * | 1-3,39 ,40 | **DOMAINES TECHNIQUES RECHERCHES (Int. Cl.4)**  A 01 D    34/66 A 01 D    55/00 |
| Y | | 4-34, 38,41 | |
| A | | 36,37 | |

---     -/-

Le présent rapport de recherche a été etabli pour toutes les revendications

| Lieu de la recherche | Date d'achèvement de la recherche | Examinateur |
|---|---|---|
| BERLIN | 03-02-1986 | SAMWEL P.N. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

## RAPPORT DE RECHERCHE EUROPEENNE

Office européen
des brevets

### DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| Y | US-A-4 117 653 (S.A. TARVER)<br><br>* figures 1-4 * | 4-11, 13-15, 23-25, 33,34, 38 | |
| A | | 36,37 | |
| | --- | | |
| Y | EP-A-0 084 293 (P.E. MUELLER)<br><br>* page 6, lignes 14-23, page 9, lignes 17-20, page 12, lignes 16-18; figures 3,13,14,17 * | 4-12, 23-27, 30,31 | |
| | --- | | |
| Y | FR-A-2 317 869 (W. REBER)<br><br>* revendications 1-5,11,12; figures 1,2 * | 4-21, 32 | DOMAINES TECHNIQUES RECHERCHES (Int Cl 4) |
| | --- | | |
| Y | US-A-2 782 585 (P.R. HERVEY)<br><br>* figure 2; colonne 3, lignes 56-63 * | 2,3,24 ,26-30 | |
| | --- | | |
| Y | EP-A-0 099 314 (KUHN S.A.)<br>* figures 2,4-6; revendications 1,3,5,9 * | 6-12 | |
| | --- | | |
| Y | FR-A-2 529 743 (HESSTON CORP.)<br>* figure 2 * | 23,24 | |
| | --- -/- | | |

Le présent rapport de recherche a été établi pour toutes les revendications

| Lieu de la recherche<br>BERLIN | Date d'achèvement de la recherche<br>03-02-1986 | Examinateur<br>SAMWEL P.N. |
|---|---|---|

**Office européen des brevets**

**RAPPORT DE RECHERCHE EUROPEENNE**

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int Cl 4) |
|---|---|---|---|
| A | --- | 30,31 | |
| Y | FR-A-1 575 089  (P.J.  ZWEEGERS & ZONEN LANDBOUWMACHINEFABRIEK N.V.) <br> * figure 3 * <br> --- | 22 | |
| Y | EP-A-0 074 695  (C.  VAN DER LELY N.V.) <br> * revendication 17;  figure 1 * <br> --- <br> ----- | 40,41 | |

DOMAINES TECHNIQUES
RECHERCHES (Int. Cl.4)

Le present rapport de recherche a éte établi pour toutes les revendications

| Lieu de la recherche | Date d'achèvement de la recherche | Examinateur |
|---|---|---|
| BERLIN | 03-02-1986 | SAMWEL P.N. |